# EUROPÄISCHE PATENTSCHRIFT

(11) **EP 4 563 114 B1**
(45) Veröffentlichungstag und Bekanntmachung des Hinweises auf die Patenterteilung: **14.01.2026**
(21) Anmeldenummer: 23213547.5
(22) Anmeldetag: 30.11.2023
(51) Int. Cl.: A61C 5/20, A61C 5/30, A61C 5/70, A61C 5/77, A61C 5/80, A61C 9/00, A61C 13/00, A61C 17/06, A61C 19/00, B33Y 10/00, B33Y 30/00, B33Y 40/20, B33Y 50/02, B29C 64/106, B29C 64/30, A61C 13/15, B29C 64/10, A61C 5/62, B29C 64/00

(54) **INTRAORALER KOMPOSIT-DRUCKER**
INTRAORAL COMPOSITE PRINTER
IMPRIMANTE INTRA-ORALE POUR COMPOSITES

(43) Veröffentlichungstag der Anmeldung: 04.06.2025
(73) Patentinhaber: Rist, Roland, 70771 Leinfelden-Echterdingen (DE)
(72) Erfinder: Rist, Roland, 70771 Leinfelden-Echterdingen (DE)
(74) Vertreter: Mzb PartmbB

(56) Entgegenhaltungen:
- CN-A- 106 725 915
- CN-A- 113 384 374
- DE-U1- 202019 002 859
- US-A1- 2015 230 900
- US-A1- 2022 125 553
- US-A1- 2023 200 955

## Beschreibung

### Gebiet der Technik

Die Erfindung bezieht sich auf das im Oberbegriff des unabhängigen Anspruchs angegebene Erzeugnis.

### Stand der Technik

Auf dem Gebiet der Zahnmedizin und -technik wurden im Laufe der vergangenen Jahrzehnte erhebliche Fortschritte erzielt. Diese Fortschritte beziehen sich sowohl auf die verwendeten Materialien als auch auf die Methoden, mit denen diese verarbeitet und angewendet werden.

Besondere Bedeutung kommt hierbei den sogenannten Kompositen zu. Unter diesem Begriff wird in der Zahntechnik eine Art von zahnfarbenem Füllmaterial bezeichnet, das aus einer Mischung von Kunststoff- und Keramikpartikeln besteht. Komposite werden in der Zahnmedizin häufig zur Füllung von Hohlräumen, zur Erstellung von Zahnfüllungen sowie zur kosmetischen Verbesserung des Aussehens der Zähne verwendet. Hierbei sind zwei Haupttypen von Kompositen zu unterscheiden: modellierbares Komposit, das einen hohen Anteil an keramischen Füllstoffen besitzt, und fließfähiges Komposit, welches einen höheren polymeren Anteil aufweist.

Zur Unterstützung des behandelnden Zahnarztes, der das Komposit manuell auf die Zähne aufträgt und formt, sind zahlreiche Techniken und Werkzeuge bekannt. Hierzu zählt die Verwendung sogenannter Matrizenbänder. Ein Matrizenband ist eine dünne, durchsichtige Folie, die zwischen zwei benachbarten Zähnen platziert wird, um zu verhindern, dass die Füllungen zusammenkleben. Ebenfalls hinlänglich bekannt ist die Nutzung von Retraktionsfäden. Ein Retraktionsfaden ist ein dünner Faden, der in den Spalt zwischen Zahn und Zahnfleisch gedrückt wird, um den Zahn auch im Bereich unter dem Zahnfleisch sichtbar zu machen. die manuellen Fähigkeiten des Zahnarztes auch entscheidend beim Auftragen von Materialien wie Komposit auf die Zähne. Derzeit wird Komposit manuell auf die Zähne aufgetragen und geformt.

Auch die Digitalisierung in der Zahntechnik schreitet erheblich voran. So hat sich gezeigt, dass digitale Technologien die Präzision und Effizienz zahnmedizinischer Verfahren erheblich verbessern können. Eine solche Technologie ist der Oberflächenscan, bei dem ein 3D-Bild des Mundes oder eines Gipsmodells des Mundes erstellt wird. Auf der Grundlage dieses 3D-Modells kann die zu ersetzende oder bearbeitende Struktur, beispielsweise eine Keramikkrone, virtuell geplant werden. Die Krone lässt sich dann entweder durch Fräsen aus einem Block Keramik oder in 3D-Druck fertigen. Auch Zahnfüllungen können in diesem additiven Verfahren Schicht für Schicht aufgebaut werden.

US 2023/200955 A1 und CN 113 384 374 A offenbaren jeweils den Gegenstand des Oberbegriffs von Anspruch 1.

US 2022/125553 A1 offenbart ein von einem Applikator getragenes Gebläse zum Trocknen eines Zahnes.

CN 106 725 915 A beschreibt eine Vorrichtung für zahnmedizinische Behandlungen, die aus einem oberen und einem unteren Kieferstützrahmen besteht, die durch Federn verbunden sind und deren vorderen Enden jeweils mit einem Scharniergestell ausgestattet sind. Diese Gestelle sind durch einen elektrischen Zylinder verbunden, der den Öffnungswinkel zwischen den Kieferstützrahmen steuert. Über dem unteren Kieferstützrahmen ist eine kreisförmige Führungsschiene angebracht, auf der ein mit einem Servomotor ausgestatteter Schlitten gleitet. Dieser Motor treibt ein Zahnrad an, das in die Zähne an der Innenseite der Führungsschiene eingreift. Auf dem Schlitten sind zwei mechanische Arme montiert, die verschiedene Werkzeuge wie eine Speichelabsaugdüse, UV-Härtungslampen, eine Luftdüse, eine Füllstoffpistole und einen Bohrer tragen, sowie eine Kamera zur Überwachung der Behandlung.

### Offenbarung der Erfindung

Die Erfindung wird in den beigefügten Ansprüchen dargelegt.

### Technische Aufgabe

Ein Problem besteht darin, dass sich die manuellen Fähigkeiten des Behandlers als limitierender Faktor in Bezug auf Präzision und Vorhersagbarkeit der intraoralen Bearbeitung des Gebisses erweisen. Obwohl Zahnärzte über ein hohes Maß an Geschick und professionelle Ausbildung verfügen, fallen insbesondere die Ergebnisse des Kompositauftrags auf die Zähne von Fall zu Fall höchst unterschiedlich aus. Mitunter empfinden Patienten das Behandlungsergebnis daher als unbefriedigend. Dies gilt vor allem bei Leistungen, die das ästhetische Erscheinungsbild der Zähne betreffen, etwa der kosmetischen Optimierung von Frontzähnen.

Beim manuellen Auftragen und Formen von Komposit handelt es sich zudem um einen aufwändigen Prozess. Der Zahnarzt muss das Material Schicht für Schicht auftragen und jede Schicht sorgfältig formen, bevor er zur nächsten übergeht. Eine entsprechende Behandlung beansprucht daher - sowohl seitens des Behandlers als auch des Patienten - viel Zeit.

Zusammengefasst birgt die konventionelle Behandlung von Zahnsubstanz im Mund des Patienten vielfältige Herausforderungen in Bezug auf Präzision, Vorhersagbarkeit und Aufwand.

### Technische Lösung

Wie aus der folgenden Beschreibung hervorgeht, wird dieses Problem gemäß dem kennzeichnenden Teil der unabhängigen Ansprüche gelöst.

### Vorteilhafte Wirkungen

Mit dem hier vorgestellten Verfahren zur Bearbeitung eines Zahnes in einem Gebiss, das die Verwendung einer intraoral fixierten Halteschiene und eines daran befestigten Applikators umfasst, wird eine deutliche Verbesserung gegenüber dem bisherigen Stand der Technik erreicht.

In einem additiven Verfahren wird hierzu fließfähiges Komposit auf den Zahn aufgetragen, während der Applikator - ähnlich einem Druckkopf - relativ zur Halteschiene mechanisch bewegt wird. Dieses Vorgehen ermöglicht es, das Komposit präzise aufzutragen und reduziert die Wahrscheinlichkeit von Fehlern, die bei herkömmlichen, manuell durchgeführten Verfahren auftreten können. Zudem ist das Ergebnis vorhersagbar, da der Prozess vollständig gesteuert und automatisiert wird.

Die Verwendung einer intraoral fixierten Halteschiene ermöglicht es während einer erfindungsgemäßen Behandlung, den Applikator genau zu positionieren und während des gesamten Verfahrens stabil zu halten. Dies gewährleistet eine konstante Qualität und Genauigkeit bei der Anwendung des Komposits, unabhängig von möglichen Bewegungen oder Unruhen des Patienten.

Darüber gestattet die vorgeschlagene Methode eine effizientere Behandlung, was sowohl für den Zahnarzt als auch für den Patienten von Vorteil ist. Durch die Automatisierung des Prozesses wird die Zeit, die das Auftragen und Formen des Komposits benötigt, erheblich reduziert. Diese Zeitersparnis führt zu einer insgesamt verkürzten Behandlungsdauer.

### Beschreibung der Ausführungsarten

Die vorgestellte Technologie kann auf verschiedene Arten ausgeführt werden, abhängig von den spezifischen Anforderungen der jeweiligen dentalen Anwendung. Jede Ausführungsform profitiert von der Kernidee der Erfindung: der Verwendung eines mit einer intraoralen Halteschiene verbundenen Applikators, um fließfähiges Komposit präzise auf einen Zahn aufzutragen.

In einer Ausführungsform kann der Applikator als ein Druckkopf konzipiert sein, der das fließfähige Komposit in kleinen Tröpfchen auf den Zahn aufbringt. Dieser Prozess ähnelt dem eines Tintenstrahldruckers, bei dem Tinte in feinen Tröpfchen auf ein Papier gesprüht wird. Nach dem Auftragen jeder Schicht Komposit würde eine neben dem Druckkopf platzierte LED das Material mit ultraviolettem Licht bestrahlen, um es auszuhärten. Durch die Verwendung dieser Technologie könnten sehr dünne und gut kontrollierte Schichten des Materials aufgetragen werden, was der Präzision und Qualität der resultierenden Zahnfüllung in hohem Maße zugutekommt.

Eine alternative Ausführungsform könnte statt des Druckkopfes ein Extrusionssystem verwenden. In diesem Fall wäre der Applikator so konzipiert, dass er das Komposit - ähnlich Zahnpasta aus einer Tube - ausdrückt. In dieser Variante könnte ein flacher Applikationskopf verwendet werden, um eine dünne Schicht des Materials aufzutragen, und die Bewegung des Applikationskopfs würde dabei helfen, die Dicke der aufgetragenen Schicht zu steuern. Auch in diesem Fall ließe sich eine Lichtquelle einsetzen, um das Material nach dem Auftragen jeder Schicht auszuhärten.

Weitgehend unabhängig von der Förderung des Komposits bieten sich unterschiedliche Lösungen an, um den Applikator bezüglich des behandelten Zahnes zu bewegen. Eine geeignete Mechanik könnte beispielsweise einen Rahmen umfassen, in dem ein Schlitten geführt wird, der in drei Richtungen positioniert werden kann. Alternativ könnte die Positionierung des Applikators durch Dreh- und Kippbewegungen erreicht werden, was in einigen Anwendungen Vorteile bieten könnte, beispielsweise wenn es darum geht, schwer zugängliche Bereiche des Zahnes zu erreichen.

Bei der Halteschiene, an der der Applikator befestigt wird, handelt es sich um eine individuell anpassbare Komponente, die auf der Grundlage eines Oberflächenscans des Gebisses des Patienten hergestellt wird. Dieser Scan könnte entweder direkt im Mund des Patienten oder von einem Gipsmodell des Gebisses des Patienten genommen werden. Die Halteschiene würde dann vorzugsweise durch ein additives Verfahren, wie beispielsweise 3D-Druck, aus Kunststoff hergestellt.

Zusätzlich zur Halteschiene und dem Applikator könnte das System auch eine Vorrichtung zur Absaugung von Feuchtigkeit enthalten, um die Oberfläche des Zahnes während des Aufbringens des Komposits trocken zu halten. Dies könnte beispielsweise ein perforierter Schlauch sein, der an die Absauganlage des Behandlungsstuhles angeschlossen wird und in die Halteschiene integriert ist. Alternativ oder zusätzlich könnte der Applikator auch eine Düse mit sanfter Druckluft enthalten, um die Zahnoberfläche unmittelbar vor der Applikation des Komposits zu trocknen.

Erfindungsgemäß umfasst der Applikator eine Vorrichtung zur Kalibrierung, um sicherzustellen, dass die tatsächliche Schichtdicke des aufgetragenen Komposits mit der berechneten Schichtdicke übereinstimmt. Diese Kalibrierung erfolgt durch einen vom Applikator mechanisch geführten Abtaster, der über die Oberfläche des Zahnes geführt wird.

### Gewerbliche Anwendbarkeit

Die vorgestellte Technologie kann auf vielfältige Weise gewerblich verwertet, hergestellt und verwendet werden, wobei sie ein breites Spektrum von Anwendungen in der Zahnmedizin und -technik abdeckt.

Eine Möglichkeit der gewerblichen Verwertung besteht darin, das System als hochmoderne, automatisierte Lösung für den Auftrag von Komposit auf Zähne in Zahnarztpraxen und -kliniken zu vermarkten. Das System könnte die Qualität und Effizienz der Zahnbehandlungen verbessern und somit zur Patientenzufriedenheit beitragen. Zudem könnte es Zahnärzten dabei helfen, ihre Arbeitslast zu reduzieren und die Behandlungszeiten zu verkürzen.

Darüber hinaus könnte die Technologie auch von Unternehmen genutzt werden, die auf die Herstellung von dentalen Geräten und Materialien spezialisiert sind. Diese Unternehmen könnten das System produzieren und an Zahnarztpraxen und - kliniken verkaufen. Die Herstellung des Systems würde die Produktion der verschiedenen Komponenten des Systems, wie der Halteschiene, des Applikators und der LED, sowie die Integration dieser Komponenten in ein voll funktionsfähiges System umfassen.

Die Herstellung der Halteschienen könnte durch additive Fertigungsverfahren, wie beispielsweise 3D-Druck, erfolgen. Dies würde es ermöglichen, die Schienen individuell an die spezifischen Anforderungen jedes Patienten anzupassen, basierend auf einem Oberflächenscan des Gebisses des Patienten. Der Applikator und die LED könnten durch herkömmliche Produktionsverfahren hergestellt werden.

Die Verwendung des Systems in der zahnmedizinischen Praxis würde den Auftrag von Komposit auf die Zähne beinhalten, entweder zum Füllen von Hohlräumen, zur kosmetischen Verbesserung des Aussehens der Zähne oder zur Behandlung von Zahnabnutzung. Dabei könnte das System sowohl für die Behandlung von Frontzähnen als auch von Backenzähnen verwendet werden.

Zusätzlich zur Verwendung in der zahnmedizinischen Praxis könnte das System auch in der zahnmedizinischen Forschung und Ausbildung von Nutzen sein. Zum Beispiel könnte es in zahnmedizinischen Schulen und Universitäten verwendet werden, um Studenten die neuesten Technologien und Verfahren in der Zahnmedizin beizubringen. In der zahnmedizinischen Forschung könnte es dazu beitragen, neue und verbesserte Methoden für den Auftrag von Komposit auf die Zähne zu entwickeln.

## Patentansprüche

1. Vorrichtung mit
einer Halteschiene,
einer Lichtquelle,
einem Applikator, beispielsweise einer Düse auf einem Portalschlitten, sowie Mitteln zur Ausführung eines Verfahrens zur Bearbeitung eines Zahnes in einem Gebiss, bei dem die Halteschiene intraoral am Gebiss fixiert wird, der Applikator an der Halteschiene befestigt wird und der Applikator bezüglich der Halteschiene mechanisch bewegt wird, während er fließfähiges Komposit auf den Zahn aufträgt, wobei die Lichtquelle neben dem Applikator das aufgetragene Komposit ultraviolett belichtet, bis dieses aushärtet,
**dadurch gekennzeichnet, dass**
die Lichtquelle eine Leuchtdiode ist und
die Mittel einen vom Applikator mechanisch geführten Abtaster zum Kalibrieren des Applikators umfassen.

2. Vorrichtung nach dem vorangehenden Anspruch, wobei
die Mittel ein Linearlager, beispielsweise einen Rahmen oder ein Portal, zum Bewegen des Applikators umfassen oder
die Mittel ein Drehlager, beispielsweise ein Schwenk- oder Kipplager, zum Bewegen des Applikators umfassen.

3. Vorrichtung nach einem der vorangehenden Ansprüche, wobei die Mittel ein vom Applikator getragenes Gebläse zum Trocknen des Zahnes umfassen.

## Claims

1. Device having
a holding rail,
a light source,
an applicator, for example a nozzle on a gantry carriage, and means for carrying out a method for processing a tooth in a denture, in which the holding rail is fixed intraorally to the denture, the applicator is fastened to the holding rail and the applicator is moved mechanically with respect to the holding rail while it applies flowable composite to the tooth, wherein the light source next to the applicator exposes the applied composite to ultraviolet light until it hardens,
**characterized in that**
the light source is a light-emitting diode and
the means comprise a scanner mechanically guided by the applicator for calibrating the applicator.

2. Device according to the preceding claim, wherein
the means comprise a linear bearing, for example a frame or a portal, for moving the applicator or
the means comprise a rotary bearing, for example a pivoting or tilting bearing, for moving the applicator.

3. Device according to one of the preceding claims, wherein
the means comprise a fan carried by the applicator for drying the tooth.

## Revendications

1. Dispositif comprenant
un rail de fixation,
une source lumineuse,
un applicateur, par exemple une buse sur un chariot à portique, ainsi que des moyens pour exécuter un procédé de traitement d'une dent dans une dentition, dans lequel le rail de fixation est fixé intra-oralement à la dentition, l'applicateur est fixé au rail de support et l'applicateur est déplacé mécaniquement par rapport au rail de support pendant qu'il applique un composite fluide sur la dent, la source lumineuse située à côté de l'applicateur exposant le composite appliqué à un rayonnement ultraviolet jusqu'à ce qu'il durcisse,
**caractérisé en ce que**
la source lumineuse est une diode électroluminescente et
les moyens comprennent un palpeur guidé mécaniquement par l'applicateur pour calibrer l'applicateur.

2. Dispositif selon la revendication précédente, dans lequel
les moyens comprennent un palier linéaire, par exemple un cadre ou un portique, pour déplacer l'applicateur, ou
les moyens comprennent un palier pivotant, par exemple un palier pivotant ou basculant, pour déplacer l'applicateur.

3. Dispositif selon l'une des revendications précédentes, dans lequel les moyens comprennent un ventilateur porté par l'applicateur pour sécher la dent.
